# EUROPEAN PATENT SPECIFICATION

(11) **EP 0 964 487 B1**
(45) Date of publication and mention of the grant of the patent: **03.09.2008**
(21) Application number: 98904371.6
(22) Date of filing: 18.02.1998
(51) Int. Cl.: H01S 3/07, H01S 3/10, H04Q 3/52, H04B 10/08, H04B 10/17

(54) **OPTICAL CROSS CONNECTION DEVICE**
OPTISCHE QUERVERBINDUNGSVORRICHTUNG
DISPOSITIF D'INTERCONNEXION OPTIQUE

(30) Priority: 25.02.1997 JP 4099997
(43) Date of publication of application: 15.12.1999
(73) Proprietor: Hitachi, Ltd., Chiyoda-ku, Tokyo 100-8010 (JP)
(72) Inventor: TSUSHIMA, Hideaki, Saitama 351-0115 (JP); KITAJIMA, Shigeki, Kanagawa 214-0001 (JP); SAWADA, Yasushi, Yokohama-shi Kanagawa 233-0011 (JP)
(74) Representative: Strehl Schübel-Hopf & Partner
(86) International application number: PCT/JP1998/000670
(87) International publication number: WO 1998/038709

(56) References cited:
- WO-A-97/04539
- JP-A- 3 087 727
- JP-A- 4 273 624
- JP-A- 7 074 746
- JP-A- 9 027 975
- US-A- 5 485 299

## Description

### TECHNICAL FIELD

The present invention relates to optical transmission equipment, an optical repeater and optical cross-connect equipment, and particularly to optical transmission equipment, an optical repeater and optical cross-connect equipment each having an optical amplifier constructed by an optical fiber doped with Erbium, etc.

### BACKGROUND ART

In a network constructed of a plurality of pieces of node equipment electrically connected to one another through optical fibers, optical transmission equipment each having an optical amplifier constructed by an optical fiber (hereinafter called "doped fiber") doped with Erbium, etc. and a pumping light source are normally used inside the respective node equipment. The optical transmission equipment has the function of receiving a data optical signal and a supervisory optical signal supplied from the upstream side thereof, which are different in wavelength from each other, amplifying the data optical signal and outputting it to the downstream side thereof, or taking it in the its own node equipment. Further, the optical transmission equipment has the function of receiving the supervisory optical signal and outputting a new supervisory optical signal to the downstream side thereof, and outputting a data optical signal on which data from within its own node equipment is carried, to the downstream side thereof. In order to achieve the functions described above, the optical transmission equipment according to the related art is constructed so as to have two light sources, i.e., a pumping light source for pumping the doped fiber and a light source for the supervisory optical signal.

The optical transmission equipment according to the related art referred to above must be provided with two types of light sources. Therefore, the optical transmission equipment has a problem in that the number of devices constituting the entire optical transmission equipment increases and its configuration becomes complex.

WO 97/04539A suggest to provide a by pass route for the super-visory signals in an optical communications system.

### DISCLOSURE OF INVENTION

An object of the present invention is to provide an optical cross-connect equipment of solving the problem of the related art and which can be simplified in their device configurations and constructed at low cost.

The object is met by the invention as defined in present claim 1. The subclaims relate to preferred modifications.

According to an example useful to understand the present invention, an optical transmission equipment comprises one or a plurality of doped fibers for amplifying an input optical signal by a pumping light, and an optical multiplexing device for multiplexing a supervisory optical signal different in wavelength from the data optical signal together with data optical signals outputted from one or plural doped fibers referred to above and outputting the multiplexed signal therefrom, and wherein a pumping and supervisory light source shared for the pumping light source and the light source of the supervisory optical signal with respect to one or plural doped fibers is provided.

Another such example relates to an optical coupler for distributing light outputted from the pumping and supervisory light source to one or plural doped fibers and the optical multiplexing device referred to above and thereby controlling the pumping and supervisory light source so as to output light modulated by supervisory information, or providing a modulator for modulating light according to the supervisory information between the optical coupler and the optical multiplexing device and thereby controlling the pumping and supervisory light source so as to output light indicative of a constant output according to a direct current signal.

Yet another such example relates to an optical multiplexing device for separating an input optical signal into a supervisory optical signal and a data optical signal and a receiver for the supervisory optical signal.

According to an embodiment of the present invention, the optical cross-connect equipment comprises optical switches each having a plurality of input terminals and output terminals for an optical signal, and a controller for controlling the optical switches and wherein the above-described optical transmission equipment connected to the plurality of input terminals of the optical switches and the plurality of output terminals thereof respectively is provided, or a plurality of data transmitters and a plurality of data receivers connected to the plurality of input terminals of the optical switches respectively are provided, thereby controlling the optical switches, the data transmitters, the data receivers and the plurality of pieces of optical transmission equipment by the controller, or a pumping and supervisory light source used for the doped fiber, which is necessary for the optical transmission equipment is provided in common to the plurality of pieces of optical transmission equipment.

Further, the optical cross-connect equipment may comprise an optical circuit including a plurality of input terminals and output terminals for optical signals, and a controller for controlling the optical circuit and wherein the optical circuit includes a wavelength multiplexing device, a wavelength demultiplexing device, an optical amplifier, or a regenerator other than the optical switches.

An optical network may be constructed by connecting a plurality of pieces of node equipment through transmission lines using optical fibers therebetween, wherein each of the plurality of pieces of node equipment is constructed so as to have the above-described optical cross-connect equipment and an optical repeater including the above-mentioned optical transmission equipment is provided midway of a transmission line using optical fibers connecting between the respective node equipment.

### BRIEF DESCRIPTION OF DRAWINGS

Fig. 1 is a block diagram showing an example of a basic configuration of optical transmission equipment ;
Fig. 2 is a block diagram illustrating another example of a basic configuration of optical transmission ;
Fig. 3 is a block diagram depicting a further example of a basic configuration of optical transmission ;
Fig. 4 is a block diagram showing a still further example of a basic configuration of optical transmission ;
Fig. 5 is a block diagram illustrating an example of a configuration of optical transmission equipment ;
Fig. 6 is a block diagram depicting another example of a configuration of optical transmission equipment ;
Fig. 7 is a block diagram showing a further example of a configuration of optical transmission equipment ;
Fig. 8 is a block diagram illustrating a still further example of a configuration of optical transmission equipment;
Fig. 9 is a block diagram depicting an example of a configuration of an optical repeater ;
Fig. 10 is a block diagram showing another example of a configuration of an optical repeater ;
Fig. 11 is a diagram for describing an example of a transmission system constructed by an optical repeater ;
Fig. 12 is a diagram for describing an example of an optical cross-connect equipment according to an embodiment of the present invention;
Fig. 13 is a diagram for describing another example of an optical cross-connect equipment according to an embodiment of the present invention;
Fig. 14 is a diagram for describing an example of a configuration of an optical circuit of an optical cross-connect equipment according to an embodiment of the present invention;
Fig. 15 is a diagram for describing another example of a configuration of an optical circuit of an optical cross-connect equipment according to an embodiment of the present invention;
Fig. 16 is a diagram for describing a further example of a configuration of an optical circuit of an optical cross-connect equipment according to an embodiment of the present invention;
Fig. 17 is a diagram for describing a still further example of a configuration of an optical circuit of an optical cross-connect equipment according to an embodiment of the present invention;
Fig. 18 is a diagram for describing a still further example of a configuration of an optical circuit of an optical cross-connect equipment according to an embodiment of the present invention;
Fig. 19 is a diagram for describing a further example of an optical cross-connect equipment according to an embodiment of the present invention;
Fig. 20 is a diagram for describing an example of a configuration of a supervisory signal transmitter and receiver of an optical cross-connect equipment ;
Fig. 21 is a diagram for describing another example of a configuration of a supervisory signal transmitter and receiver of an optical cross-connect equipment ;
Fig. 22 is a diagram for describing a further example of a configuration of a supervisory signal transmitter and receiver of an optical cross-connect equipment ;
Fig. 23 is a diagram for describing a still further example of a configuration of a supervisory signal transmitter and receiver of an optical cross-connect equipment ;
Fig. 24 is a diagram for describing a still further example of a configuration of an optical circuit of an optical cross-connect equipment;
Fig. 25 is a diagram for describing a still further example of an optical cross-connect equipment ; and
Fig. 26 is a diagram showing an example of an optical network constructed by pieces of node equipment each of which is comprised of an optical cross-connect equipment .

### BEST MODE FOR CARRYING OUT THE INVENTION

Preferred embodiments and examples of optical transmission equipment, an optical repeater including the optical transmission equipment, and an optical network using the optical repeater will hereinafter be described in detail with reference to the accompanying drawings.

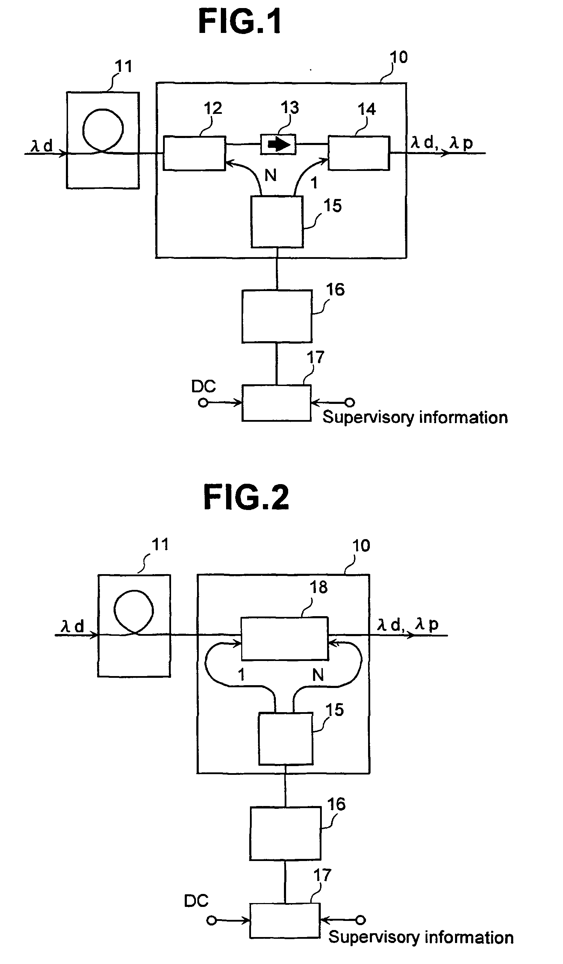

Fig. 1 is a block diagram showing a basic configuration of a piece of optical transmission equipment according to an example useful to understand the present invention, and Fig. 2 is a block diagram illustrating another example of a basic configuration of a piece of optical transmission equipment according to an example useful to understand the present invention, respectively. In Figs. 1 and 2, reference numeral 11 indicates a doped fiber doped with Erbium, etc., reference numerals 12 and 14 indicate wavelength multiplexing devices, reference numeral 13 indicates an isolator, reference numeral 15 indicates an optical coupler, reference numeral 16 indicates a light source for pumping and supervision, reference numeral 17 indicates a driver, and reference numeral 18 indicates a bi-directional wavelength multiplexing device, respectively. Incidentally, the optical transmission equipment according to the examples, which are shown in Figs. 1 and 2, provide or exhibit only functions of amplification and transmission of a data optical signal inputted thereto and of transmission of a supervisory optical signal. Further, the optical transmission equipment can be utilized as a transmission-side apparatus having data to be transmitted therefrom. While a supervisory signal capturing or extracting function is omitted herein, the present function can be added thereto as the known component of apparatus.

The optical transmission equipment shown in Fig. 1 comprises the doped fiber 11 which amplifies a data optical signal having a wavelength λd inputted from an optical fiber on the upstream side in response to pumping light inputted to the doped fiber 11, the wavelength multiplexing device 12 which inputs the pumping light to the doped fiber 11, the optical isolator 13 which transmits the amplified data optical signal sent from the wavelength multiplexing device 12 in a predetermined direction, i.e., only in the right direction in the case of the illustrated example, the wavelength multiplexing device 14 which multiplexes the amplified data optical signal and a supervisory optical signal having a wavelength λp and outputs it to an optical fiber on the downstream side, the light source 16 for pumping and supervision, which emits a light of wavelength λp for pumping and supervision, the optical coupler 15 which distributes the pumping and supervisory light emitted from the light source 16 to the wavelength multiplexing devices at a constant ratio of N : 1, and the driver 17 which is supplied with supervisory information and a direct current signal so as to control the light source 16. While the optical isolator 13 is placed between the wavelength multiplexing devices 12 and 14 in the aforementioned example of construction, it may be placed so as to differ in position. Alternatively, the optical isolator 13 may be omitted. Further, the wavelength multiplexing device 12, the wavelength multiplexing device 14 and the optical coupler 15 can be integrally formed as an optical circuit.

A feature of the optical transmission equipment according to the example shown in Fig. 1 resides in that only the pumping and supervisory light source 16 provides the light source for pumping the doped fiber 11 and the light source for the supervisory information. Namely, the pumping and supervisory light source 16 outputs a light of wavelength λp usable for the light source for pumping the doped fiber 11 and the light source for supervisory information. This light is divided at the constant ratio N : 1 predetermined by the optical coupler 15 in power thereof. The light divided at "N" of the ratio is applied to the doped fiber 11 through the wavelength multiplexing device 12 so as to pump up the doped fiber 11. The light divided at "1" of the ratio is inputted to the wavelength multiplexing device 14 as the supervisory optical signal together with the amplified data optical signal inputted through the isolator 13, followed by multiplexing. Thereafter, the multiplexed signal is outputted to the optical fiber on the downstream side. Here, the "N" is a value determined by the ratio of the power of pumping light necessary for the doped fiber and that necessary for the supervisory optical signal. It may generally range from 10 to several hundreds. As a matter of course, the power of the light outputted from the pumping and supervisory light source 16 needs more than the sum of the power of the pumping light necessary for the doped fiber and that necessary for the supervisory optical signal.

Since the pumping and supervisory light source 16 is controlled by the driver 17 which receives the direct current signal DC and the supervisory information, the light outputted therefrom results in one modulated by the supervisory information and the power thereof results in one controlled by the direct current signal DC. As described above, part of the output light is inputted to the wavelength multiplexing device 14 as the supervisory optical signal together with the amplified data optical signal inputted through the isolator 13, where they are subjected to multiplexing, followed by output to the optical fiber on the downstream side. Further, the modulated part of light output is supplied to the doped fiber 11 so as to pump the doped fiber. Since, however, the supervisory information is low in bit rate, the doped fiber 11 is pumped without being affected by the modulated pumping light.

The optical transmission equipment according to the example shown in Fig. 2 is one wherein a bi-directional wavelength multiplexing device 18 is provided as an alternative to the wavelength multiplexing devices 12 and 14 and optical isolator 13 employed in the optical transmission equipment described with reference to Fig. 1. Other portions are constructed in a manner similar to those shown in Fig. 1. In the optical transmission equipment according to the present example, the bi-directional wavelength multiplexing device 18 supplies the output light produced from the pumping and supervisory light source 16, which is divided by the optical coupler 15, to the doped fiber 11 as the pumping light. Further, the bi-directional wavelength multiplexing device 18 outputs the amplified data optical signal and the supervisory optical signal produced from the pumping and supervisory light source 16, which is divided by the optical coupler 15, to the optical fiber on the downstream side.

According to the examples shown in Figs. 1 and 2, the single pumping and supervisory light source 16 can be shared for the light source for pumping the doped fiber 11 and the light source for the supervisory information, thereby making it possible to simplify the construction of the optical transmission equipment. While the data optical signal is described as a signal of a single wavelength in the configurations shown in Figs. 1 and 2, it may be a signal of wavelength multiplexed.

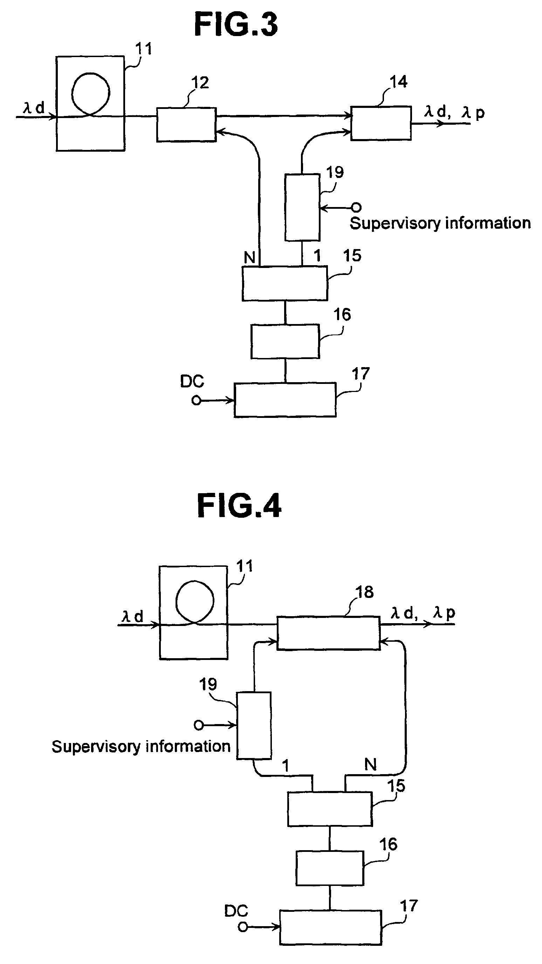

Fig. 3 is a block diagram showing a basic configuration of optical transmission equipment according to a further example useful to understand the present invention, and Fig. 4 is a block diagram showing another example of a basic configuration of optical transmission equipment according to an example useful to understand the present invention, respectively. In Figs. 3 and 4, reference numeral 19 indicates a modulator, and other reference numerals are the same as those shown in Figs. 1 and 2. Although the optical transmission equipment described in Figs. 1 and 2 are constructed so that the supervisory information is inputted to the driver 17 for controlling the pumping and supervisory light source 16 to modulate the output light from the pumping and supervisory light source 16 according to the supervisory information, the optical transmission equipment according to the examples shown in Figs. 3 and 4, are provided with the modulator for the supervisory information separately and operate in a manner similar to the optical transmission equipment explained in Figs. 1 and 2.

The optical transmission equipment shown in Fig. 3 according to the example is basically identical to the optical transmission equipment shown in Fig. 1. However, the optical transmission equipment shown in Fig. 3 is different from that shown in Fig. 1 in that the modulator 19 for modulating the input light according to the supervisory information is inserted between the wavelength multiplexing device 14 for multiplexing the amplified data optical signal (whose wavelength is λd) and the supervisory optical signal and outputting the multiplexed signal to the optical fiber on the downstream side, and the optical coupler 15 for distributing the output light produced from the light source 16 at the constant ratio N : 1 for the purposes of pumping and supervision. Thus, the driver 17 employed in the present example may simply control the power of the output light of the pumping and supervisory light source 16, based on the direct current signal DC. Although, however, the optical isolator is not shown in Fig. 3, it can be also provided in the same manner as in Fig. 1.

The optical transmission equipment according to the example shown in Fig. 4 is basically identical to that shown in Fig. 2. However, the optical transmission equipment shown in Fig. 4 is different from that shown in Fig. 2 in that the modulator 19 for modulating the input light according to the supervisory information is inserted between the input terminal for the supervisory optical signal of the bi-directional wavelength multiplexing device 18 and the optical coupler 15 for distributing the output light produced from the light source 16 at the constant ratio N : 1 for the purposes of pumping and supervision. Thus, even in the case of the present example, the driver 17 may simply control the power of output light of the pumping and supervisory light source 16, based on the direct current signal DC.

According to the examples shown in Figs. 3 and 4, since the pumping output light produced from the pumping and supervisory light source 16 is not modulated, the pumping and supervisory light source 16 can pump up the doped fiber 11 with pure pumping light. Further, even when the bit rate of the supervisory information increases, the pumping and supervisory light source 16 can pump up the doped fiber 11 with certainty. Although the data optical signal is described as a signal of a single wavelength in the configurations shown in Figs. 3 and 4, the data optical signal may be a wavelength multiplexed signal.

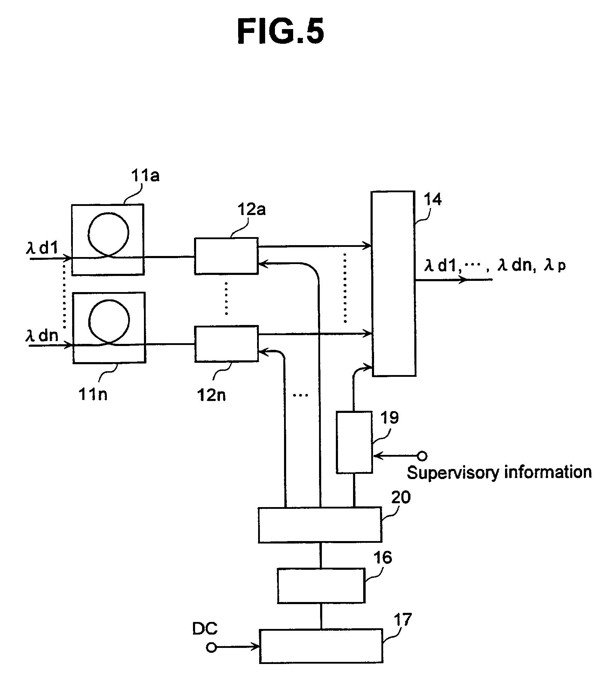

Fig. 5 is a block diagram showing a configuration of optical transmission equipment according to an example useful to understand the present invention. In Fig. 5, reference numerals 11a through 11n indicate doped fibers, reference numerals 12a through 12n indicate wavelength multiplexing devices, and reference numeral 20 indicates a star coupler, respectively. Other reference numerals are the same as those shown in Fig. 3. The example shows an application of the example shown in Fig. 3 applied to a piece of wavelength multiplexed type optical transmission equipment.

The optical transmission equipment shown in Fig. 5 comprises the plurality of doped fibers 11a through 11n for respectively amplifying a plurality of data optical signals having wavelengths λd₁ through λdₙ, the wavelength multiplexing devices 12a through 12n provided so as to correspond to the respective doped fibers 11a through 11n, for respectively supplying pumping light to these doped fibers 11a through 11n and transmitting the amplified data optical signals, a wavelength multiplexing device 14 for multiplexing the amplified data optical signals and a supervisory optical signal of wavelength λp and outputting the multiplexed signal to an optical fiber on the downstream side, a modulator 19 for modulating input light according to supervisory information and transmitting it to the wavelength multiplexing device 14, a star coupler 20 for distributing light outputted from a pumping and supervisory light source 16 to the wavelength multiplexing devices 12a through 12n and the modulator 19, the pumping and supervisory light source 16 for emitting the light of wavelength λp for pumping and supervision, and a driver 17 supplied with a direct current signal DC so as to control the power of the output light of the light source 16.

Although each of the data optical signals λd₁ through λdₙ is explained as a signal of a single wavelength in the configuration shown in Fig. 5, they may be wavelength multiplexed signals respectively.

In the aforementioned examples shown in Figs. 1 through 5, when the doped fibers 11a through 11n are of Erbium-doped fibers doped with Erbium, wavelengths of light signals lying in a 1.48 µm-band or wavelengths of light signals lying in a 0.98 µm-band are used as the wavelengths λp of the pumping and supervisory optical signals. In this case, wavelengths of light signals lying within a 1.5 µm-band are used as the wavelengths of the data optical signals λd₁ through λdₙ.

In addition to the effects obtained by the example shown in Fig. 3, the example shown in Fig. 5 according the present invention can obtain effects in that the plurality of doped fibers can be pumped up by providing one pumping and supervisory light source 16 alone, and the light source can be shared for the supervisory information.

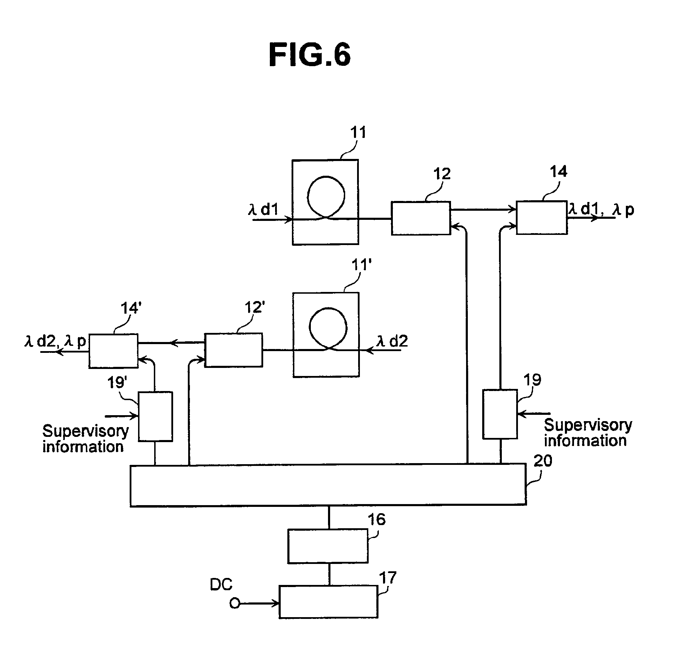

Fig. 6 is a block diagram showing another configuration of the optical transmission equipment according to an example useful to understand the present invention. In Fig. 6, reference numeral 11' indicates a doped fiber, and reference numerals 12' and 14' indicate wavelength multiplexing devices. Other reference numerals are the same as those shown in Figs. 3 and 5. The example shows an application of the example shown in Fig. 3 applied to bi-directional optical transmission equipment.

The optical transmission equipment shown in Fig. 6 is optical transmission equipment wherein data optical signals of wavelengths λd₁ and λd₂ are respectively transmitted in reverse directions through each independent optical fiber. A portion for amplifying the data optical signal of wavelength λd₁ and relaying it, which is comprised of the doped fiber 11, wavelength multiplexing devices 12 and 14, and modulator 19, is completely the same as that shown in Fig. 3 in configuration. The present optical transmission equipment is different from that shown in Fig. 3 in that there are provided the doped fiber 11', wavelength multiplexing devices 12' and 14' and modulator 19' for amplifying the data optical signal of wavelength λ d₂ and relaying it in the opposite direction. The example shown in Fig. 6 is constructed so as to have a star coupler 20 for distributing light outputted from a pumping and supervisory light source 16 to the wavelength multiplexing devices 12 and 12' and modulators 19 and 19' in common with respect to these, the pumping and supervisory light source 16 for emitting light having wavelength λp for pumping and supervision, and a driver 17 for controlling the power of output light of the light source 16 according to the application of a direct current signal DC.

In addition to the effects obtained by the example shown in Fig. 3, the example shown in Fig. 6 can obtain effects in that the two doped fibers for amplifying the data optical signals to be transmitted in the directions opposite to each other can be pumped up by providing one pumping and supervisory light source 16 alone, and the light source can be also shared for the supervisory information.

Incidentally, the light signals of λd₁ and λd₂ may be bi-directionally transmitted by a single optical fiber. In such a case, it is necessary to add, on the left and right side, i.e., both sides of the optical transmission equipment shown in Fig. 6, devices which perform the multiplexing and demultiplexing of the light signals of λd₁ and λd₂. While the data optical signal is described as a signal having a single wavelength in the configuration shown in Fig. 6, it may be a wavelength multiplexed signal.

The present example can be applied even to the optical transmission equipment of the wavelength multiplexed type shown in Fig. 5. As a result, it can construct a piece of bi-directional optical transmission equipment of wavelength multiplexed type.

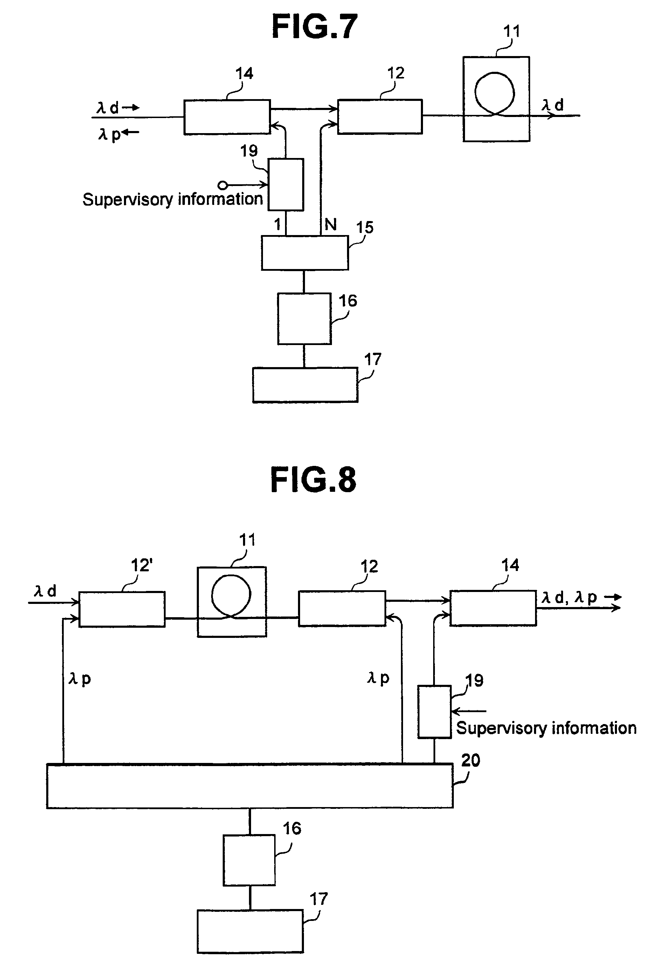

Fig. 7 is a block diagram showing a further configuration of the optical transmission equipment according to an example useful to understand the present invention. Reference numerals in the drawing are identical to those shown in Fig. 3.

In the respective examples , which have been described so far, the data optical signal and the supervisory optical signal are identical to each other in the direction of transmission. However, the present example shows a case wherein the transmission direction of the supervisory optical signal is set opposite to that of the data optical signal.

The optical transmission equipment according to the example shown in Fig. 7 is different from that shown in Fig. 3 in that a doped fiber is provided on the output side of the data optical signal and a modulator 19 for supervisory information is provided between a wavelength multiplexing device 14 provided on the input side and a coupler 15. The present optical transmission equipment is constructed in the same as that shown in Fig. 3 in other respects. Owing to such a construction, the optical transmission equipment shown in Fig. 7 can transmit the supervisory optical signal modulated by the modulator 19 based on the supervisory information in the direction opposite to that of transmission of the data optical signal through the wavelength multiplexing device 14.

Although the data optical signal is described as a signal of a single wavelength in the configuration shown in Fig. 7, it may be a wavelength multiplexed signal.

Fig. 8 is a block diagram illustrating a still further configuration of the optical transmission equipment according to an example useful to understand the present invention. Reference numerals in the drawing are identical to those shown in Fig. 6. The present example makes it possible to pump up a doped fiber from both directions thereof.

The optical transmission equipment according to the example shown in Fig. 8 is completely the same as that shown in Fig. 3 in that a portion for amplifying the data optical signal of - wavelength λd and relaying it, which is comprised of the doped fiber 11, wavelength multiplexing devices 12 and 14, and modulator 19, while it is different from that shown in Fig. 3 in configuration, in that another wavelength multiplexing device 12' is provided at a front stage of the doped fiber 11, and an input data optical signal and pumping light are inputted to the wavelength multiplexing device 12'. The example shown in Fig. 8 comprises a star coupler 20 for distributing light outputted from a pumping and supervisory light source 16 to the wavelength multiplexing devices 12 and 12' and modulator 19 in common with respect to these, the pumping and supervisory light source 16 for emitting light having wavelength λp for pumping and supervision, and a driver 17 for controlling the power of the output light of the light source 16 according to the application of a direct current signal DC.

According to such a construction, the doped fiber 11 is pumped up from both directions by the wavelength multiplexing devices 12 and 12', so that a large optical amplification factor or gain can be obtained. In the present construction as well, the two doped fibers 11 can be provided in series at positions shown in the drawing. In this case, a further large optical amplification factor or gain can be obtained.

According to the example shown in Fig. 8, the provision of one pumping and supervisory light source 16 alone allows the amplification of the data optical signal with the large amplification gain. It is also possible to obtain an effect that the light source can be shared even for the supervisory information.

Though the data optical signal is explained as a signal of a single wavelength in the configuration shown in Fig. 8, it may be a wavelength multiplexed signal.

The respective examples described so far have been explained as the optical transmission equipment having only the function of amplifying and transmitting the input data optical signal and the function of transmitting the supervisory optical signal. A description will next be made of examples of optical repeaters each provided with the function of taking in or extracting supervisory information from the corresponding optical transmission equipment on the upstream side with respect to the aforementioned optical transmission equipment.

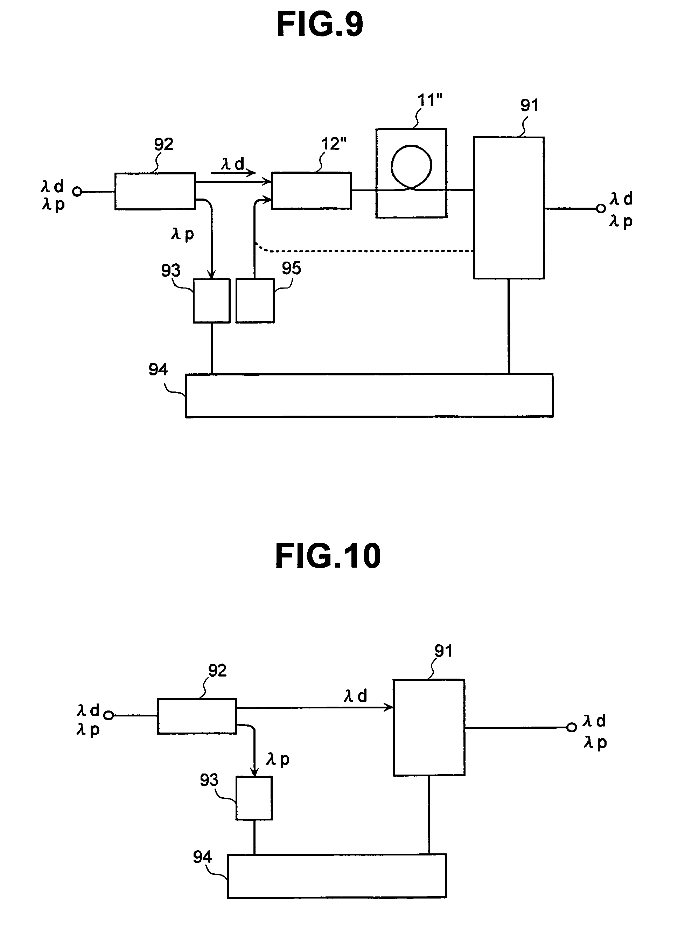

Fig. 9 is a block diagram showing an example of a configuration of an optical repeater according to another example useful to understand the present invention, and Fig. 10 is a block diagram showing another configuration of the optical repeater according to an example useful to understand the present invention, respectively. In Figs. 9 and 10, reference numeral 11'' indicates a doped fiber, reference numeral 12'' indicates a wavelength multiplexing device, reference numeral 91 indicates the optical transmission equipment heretofore described by the examples, reference numeral 92 indicates a wavelength demultiplexing device, reference numeral 93 indicates a supervisory information receiver, reference numeral 94 indicates a controller, and reference numeral 95 indicates a pumping light source, respectively.

The optical repeater according to the example shown in Fig. 9 comprises, on the input side of the optical transmission equipment 91 having the configuration according to each of the examples explained by reference to Figs. 1 through 4 and Fig. 8, the doped fiber 11'', the wavelength multiplexing device 12'' for inputting a data optical signal and pumping light produced from the pumping light source 95 to the doped fiber, the wavelength demultiplexing device 92 for extracting a data optical signal of wavelength λd and a supervisory optical signal of wavelength λp from an input light signal, the supervisory information receiver 93 for receiving the supervisory optical signal and converting it into an electrical signal, followed by delivery to the controller, and the controller 94 for controlling the overall optical repeater. In the example shown in Fig. 9, optical signals including a data optical signal and a supervisory optical signal sent from another unillustrated optical repeater which is connected to the front stage, are divided into the data optical signal and the supervisory optical signal by the wavelength demultiplexing device 92. The supervisory optical signal of wavelength λp is converted to the electrical signal by the supervisory information receiver, which in turn is inputted to the controller 94. Together with the pumping light produced from the pumping light source 95 emitting the light of wavelength λp, the data optical signal of wavelength λd is supplied via the wavelength multiplexing device 11 to the doped fiber 11, where it is amplified and inputted to the optical transmission equipment 91. The controller 94 for controlling the overall optical repeater produces electrical supervisory information to be transmitted to a back stage thereof on the basis of the supervisory information outputted from the supervisory information receiver 93 and transmits it to the optical transmission equipment 91. As described above, the optical transmission equipment 91 produces a supervisory optical signal, based on the supervisory information sent from the controller 94 and transmits it to the downstream side together with the input data optical signal.

Although the pumping light source 95 for pumping the doped fiber 11'' is provided in the example shown in Fig. 9, it can be used in common with a pumping and supervisory light source provided within the optical transmission equipment 91. If the wiring is made as indicated by a dotted line in Fig. 9, then the pumping light source 95 can be omitted.

The optical repeater shown in Fig. 10 is one in which the doped fiber 11'', wavelength multiplexing device 12" and pumping light source 95 employed in the optical repeater shown in Fig. 9 are deleted to thereby omit the amplification function of the data optical signal therefrom. This example is suitable for use in the case in which the optical transmission equipment 91 is provided with the doped fiber having sufficient gain. This can perform the same function with a simple structure as compared with the doped fiber shown in Fig. 9. According to the examples shown in Figs. 9 and 10, a complete optical repeater having the function of extracting the supervisory signal can be simplified in configuration. Further, the data optical signal may be a signal of a single wavelength or a wavelength multiplexed signal in which a plurality of wavelengths are multiplexed.

Although the optical transmission equipment having the construction described by the example shown in each of Figs. 1 through 4 and Fig. 8 is used as the optical transmission equipment 91 in the examples shown in Figs. 9 and 10, the present invention can utilize the optical transmission equipment according to the examples shown in Figs. 5 through 7 as the optical transmission equipment 91 so as to construct the optical transmission equipment of wavelength multiplexed type, the optical transmission equipment of bi-directional type, and the optical transmission equipment for transmitting the supervisory optical signal in the direction opposite to that of the data optical signal.

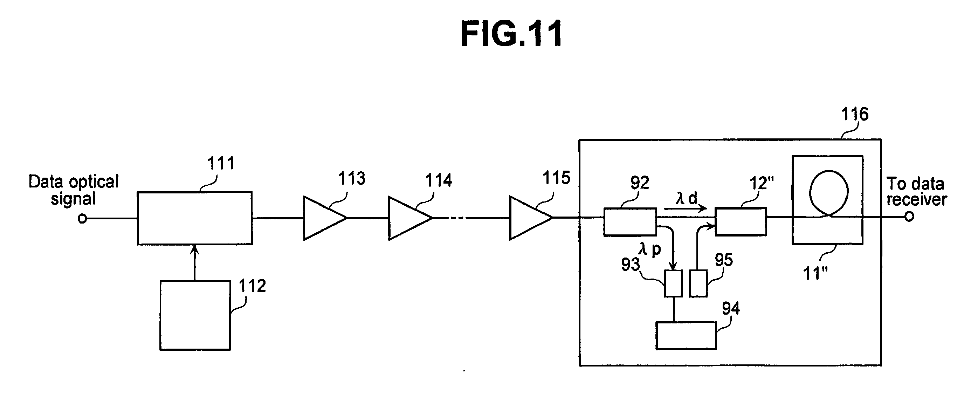

Fig. 11 is a diagram for describing an example of a transmission system constructed by the optical repeaters according to the examples which haven heretofore been described. In Fig. 11, reference numeral 111 indicates optical transmission equipment of the transmitting side, reference numeral 112 indicates a controller, reference numerals 113 through 115 indicate optical repeaters, and reference numeral 116 indicates optical transmission equipment of the receiving side, respectively.

In Fig. 11, the optical transmission equipment 111 of the transmitting side is provided at a data transmitting end and supplied with a data optical signal from an unillustrated data transmitter. Further, supervisory information represented in the form of an electrical signal is inputted to the optical transmission equipment 111 from the controller 112. One of the pieces of optical transmission equipment according to the examples , which are described with reference to Figs. 1 through 4 and Fig. 8, for example, may be used as the present optical transmission equipment 111 of the transmitting side. The optical repeater 111 transmits an optical signal obtained by amplifying the inputted data optical signal and a supervisory optical signal modulated according to the supervisory information from the controller 112 to the optical transmission equipment 116 of the receiving side through a transmission line composed of optical fibers respectively having the optical repeaters 113 through 115. One of the optical repeaters according to the examples described in Figs. 9 and 10 may be used as the optical repeaters 113 through 115. Further, the equipment 116 of the receiving side takes a construction excluding the optical transmission equipment 91 of the optical repeater described in Fig. 9. Light outputted from a doped fiber 11'' is connected to an unillustrated data receiver. The equipment 116 of the receiving side may take a configuration excluding the optical transmission equipment 91 of the optical repeater described in Fig. 10. While the data optical signal is described as the signal of single wavelength in the construction shown in Fig. 11, it may be a wavelength multiplexed signal.

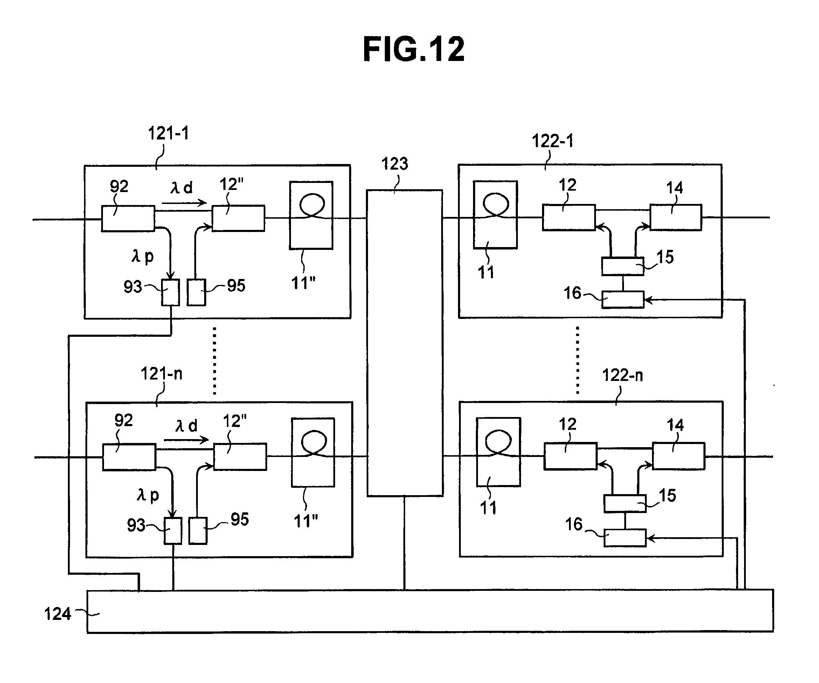

Fig. 12 is a diagram for describing an example of optical cross-connect equipment constructed by the optical repeaters according to the examples mentioned above. In Fig. 12, reference numerals 121-1 through 121-n and 122-1 through 122-n indicate optical repeaters, reference numeral 123 indicates an optical switch, and reference numeral 124 indicates a controller, respectively.

The example of the optical cross-connect equipment shown in Fig. 12 illustrates the optical cross-connect equipment which incorporates therein the optical repeaters according to the respective examples described above. The present optical cross-connect equipment comprises the optical switch 123 having a large number of optical switching elements and the function of switching between optical signals so that each optical signal is transmitted from any input terminal to any output terminal, a plurality of the optical repeaters 121-1 through 121-n electrically connected to their corresponding plural input terminals, a plurality of the optical repeaters 122-1 through 122-n electrically connected to their corresponding plural output terminals, and the controller 124 for controlling the entirety of these.

Since it is constructed so as to have the large number of optical switching elements thereinside, the optical switch 123 causes an insertion loss of light. Therefore, the plurality of optical repeaters 121-1 through 121-n electrically connected to their corresponding input terminals of the optical switch 123 may preferably be provided with an optical amplifying function respectively. In the example shown in Fig. 12, the optical switch 123 takes a structure wherein the optical transmission equipment 91 is omitted from the optical repeater described with reference to Fig. 9. Further, lights outputted from doped fibers 11'' are connected to the optical switch 123. In the above-described construction, only one of pumping light sources 59 contained in the plurality of optical repeaters 121-1 through 121-n may be provided over all of the optical repeaters 121-1 through 121-n and may be shared between the optical repeaters 121-1 through 121-n. When the data optical signals inputted to the optical repeaters 121-1 through 121-n are large in level, the optical repeaters 121-1 through 121-n need not have the amplifying function. In this case, as the optical repeaters 121-1 through 121-n may be used those each having a construction excluding the optical transmission equipment 91 of the optical repeater described with reference to Fig. 10.

In the example illustrated in Fig. 12, each of the plurality of optical repeaters 122-1 through 122-n connected to their corresponding output terminals of the optical switch 123 makes use of the optical repeater described with reference to Fig. 1. Further, the optical transmission equipment described with reference to Figs. 2 through 4 and Fig. 8 can be used as these optical repeaters 122-1 through 122-n.

In the optical cross-connect equipment constructed as described above, the controller 124 receives supervisory information each divided from the optical signal inputted to each optical repeater and converted into an electrical signal, from the respective optical repeaters 121-1 through 121-n, and controls the optical switch 123 based on the supervisory information or other control information thereby to output the data optical signals outputted from the optical repeaters 121-1 through 121-n to their corresponding optical repeaters 122-1 through 122-n on the output side. Further, the controller 124 effects necessary processing on the received supervisory information and distributes the respective supervisory information to the optical repeaters 122-1, 122-n to transmit the supervisory information, thereby controlling the corresponding pumping and supervisory light sources 16 provided within the respective optical repeaters.

When the respective optical transmission equipment described with reference to Figs. 3, 4 and 8 are used as the optical repeaters 122-1 through 122-n, the controller 124 may control the modulator 19 according to the supervisory information. In this case, only one of the pumping and supervisory light sources 16 provided in the optical transmission equipment described with reference to Figs. 3, 4 and 8 may be provided over all of the optical repeaters 122-1 through 122-n and may be shared between the optical repeaters 122-1 through 122-n. Further, the single pumping and supervisory light source may be used in common as the pumping light sources for the optical repeaters 121-1 through 121-n.

In the optical cross-connect equipment constructed as described above, the optical switches and the large number of optical repeaters contained thereinside can be controlled by the single controller. Further, the single light source can be shared for the pumping light source and the light source for supervisory information although it depends on the output power of the light source. Moreover, the present light source can be shared between the large number of optical repeaters. Thus, the equipment can be constructed in small size and at low cost.

Although the data optical signal is explained as a signal of a single wavelength in the construction shown in Fig. 12, it may be a wavelength multiplexed signal.

When the data optical signal is given as the wavelength multiplexed signal in Fig. 12, a wavelength demultiplexer may be provided between the optical repeater 121 and the optical switch 123 and a wavelength multiplexer may be provided between the optical switch 123 and the optical repeater 122. Thus, the optical switch 123 can realize switching in light units. Since, in this case, the number of optical signals to be changed over increases, it is necessary to construct the optical switch 123 on a large scale.

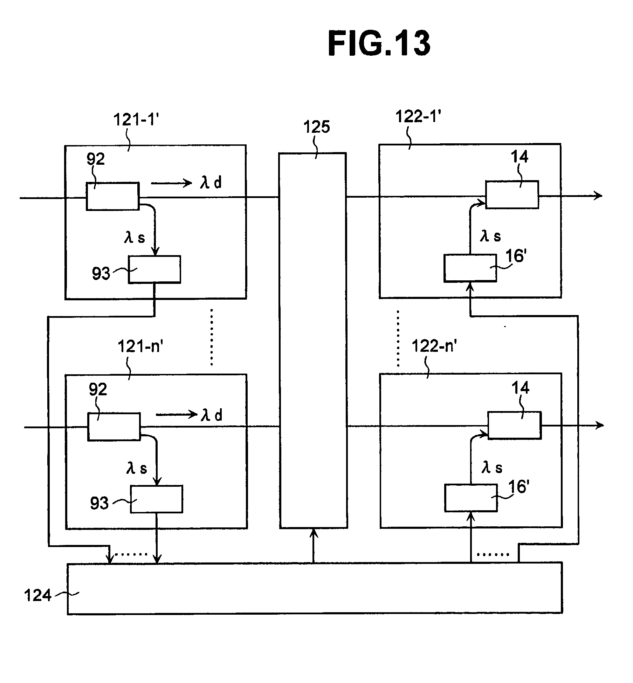

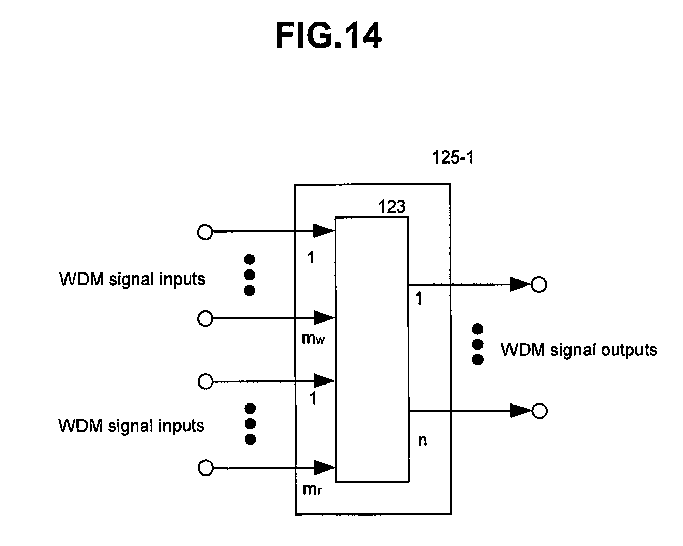

Other optical cross-connect equipment according to the present invention will next be described with reference to Figs. 13 through 18. Fig. 13 is a diagram for describing another example of the optical cross-connect equipment constructed by using the optical repeaters according to the embodiments of the present invention explained so far. In Fig. 13, reference numerals 121-1' through 121-n' and 122-1' through 122-n' indicate optical repeaters, reference numerals 16' indicate supervisory light sources, and reference numeral 125 indicates an optical circuit including optical switches. Other reference numerals are identical to those shown in Fig. 12. Embodiments each illustrative of the optical circuit are shown in Figs. 14 through 18.

In the optical cross-connect equipment described by reference to Fig. 12, when the level of the data optical signal inputted/outputted to and from each optical repeater 121 is large and the insertion loss of the optical switch 123 is small, the optical repeaters 122 need not have the function of amplification. The optical cross-connect equipment shown in Fig. 13 illustrates an example constructed so that no amplifying function is provided in the optical repeaters. Namely, the optical cross-connect equipment shown in Fig. 13 comprises the optical repeaters 121-1' through 121-n' and 122-1' through 122-n' which have no amplifying function. Each of the optical repeaters 121-1' through 121-n' has the function of dividing or demultiplexing and receiving the supervisory optical signal, whereas each of the optical repeaters 122-1' through 122-n' has the function of multiplexing and sending the supervisory optical signal and the data optical signal. Therefore, the light sources 16' included in the optical repeaters 122-1' through 122-n' are respectively used only as the supervisory light sources. Therefore, the wavelength λs of the light source may be a wavelength lying in a 1.3 µm band or 1.5 µm band (for example, at 1.51 µm) which shows less loss in the transmission line, outside the band of the Erbium doped fiber. Alternatively, the wavelength thereof may be a wavelength of 1.48 µm which is the same as that of the pumping light source.

The supervisory optical signal sent from the upstream side includes a control signal of the optical circuit 125. Thus, the optical switches, optical amplifiers, regenerators, etc. included in the optical circuit can be controlled by the control signal. Similarly, a control signal for cross-connect equipment on the downstream side may be included in a supervisory optical signal to be transmitted to the downstream side thereof.

Examples of the optical circuits applicable to the optical cross-connect equipment shown in Fig. 13 are shown in Figs. 14 through 18. The optical circuit 125-1 shown in Fig. 14 is an optical matrix switch having a (m_{w} + mᵣ) × n configuration. The optical circuit 125-1 switches WDM signals collectively. For example, when m_{w} pieces of working fibers and mᵣ pieces of restoration fibers are connected to their corresponding input terminals of the optical circuit 125-1, the optical circuit 125-1 changes over transmission lines from the working fibers where failures occur, to the normal restoration fibers under the control of the controller 124 upon optical fiber cut or optical cable cut, thereby making it possible to realize the restoration from the failures.

Here, the optical switch used in the optical circuit may be a blocking type or non-blocking type. Further, the number of the inputs of the optical circuit and the number of the outputs thereof may be identical to each other or different from each other. Furthermore, while the WDM signal is described as a uni-directional one in the above-described example, it may be a uni-wavelength signal or a bi-directional signal.

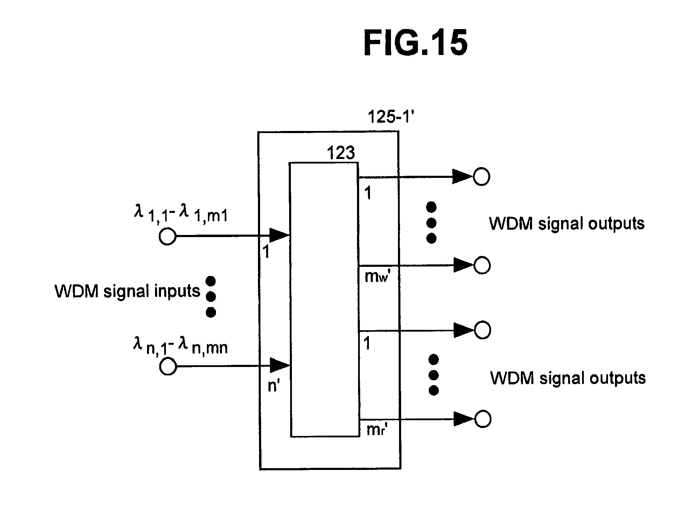

The optical circuit 125-1' shown in Fig. 15 is an optical matrix switch having a n' × (n_{w}' + mᵣ') configuration. The optical circuit 125-1' switches WDM signals collectively. For example, when m_{w}' pieces of working fibers and mᵣ' pieces of restoration fibers are connected to their corresponding output terminals of the optical circuit 125-1', the optical circuit 125-1' changes over transmission lines from the working fibers where failures occur, to the normal restoration fibers under the control of the controller 124 upon optical fiber cut or optical cable cut, thereby making it possible to realize the restoration from the failures.

Here, the optical switch used in the optical circuit may be a blocking type or non-blocking type. Further, the number of the inputs of the optical circuit and the number of the outputs thereof may be identical to each other or different from each other. Furthermore, while the WDM signal is described as a uni-directional one in the above-described example, it may be a uni-wavelength signal or a bi-directional signal.

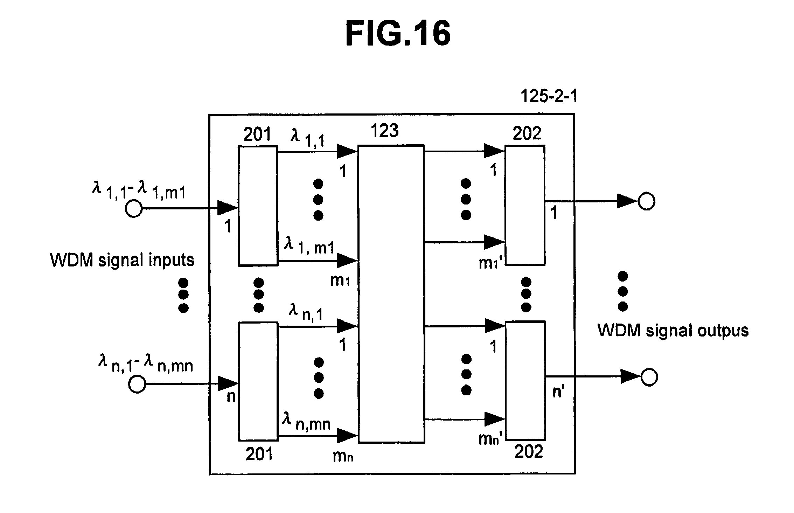

The optical circuit 125-2-1 shown in Fig. 16 comprises a wavelength demultiplexing circuit 201, an optical switch 123 having a (m₁ + ... + mₙ) × (m₁' + mₙ') configuration, and a wavelength multiplexing circuit 202. The optical circuit 125-2-1 wavelength-demultiplexes the input WDM signals and performs switching every individual wavelengths. Further, the optical circuit 125-2-1 performs wavelength multiplexing so as to produce each output. This has the function of performing routing for each wavelength. While the wavelength demultiplexing of the WDM signals is shared by a plurality of the wavelength multiplexing circuits 201 and 202, it may be shared by one wavelength demultiplexing circuit 201 and one wavelength multiplexing circuit 202. Here, the optical switch 123 is controlled by the controller 124 shown in Fig. 13.

The optical switch employed in the optical circuit may be a blocking type or non-blocking type. Further, the number of the inputs of the optical circuit and the number of the outputs thereof may be identical to each other or different from each other. Furthermore, while the WDM signal is described as a uni-directional one in the above-described example, it may be a uni-wavelength signal or a bi-directional signal.

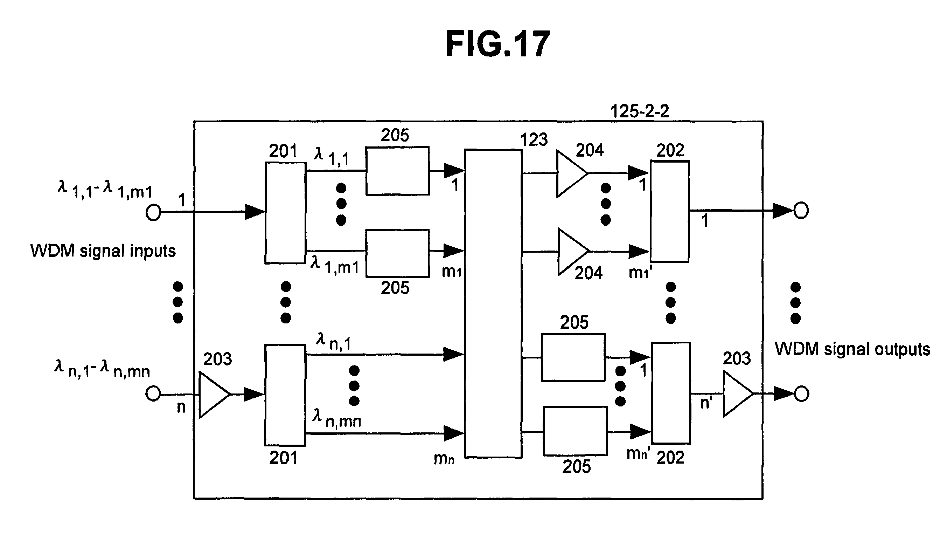

The optical circuit 125-2-2 shown in Fig. 17 is one in which the optical circuit 125-2-1 shown in Fig. 16 is improved and it is applicable to long-distance optical fiber transmission. Therefore, regenerators 205 or optical amplifiers 204 for each individual wavelengths are inserted between the wavelength demultiplexing circuit 201 and the optical switch 123 having the (m₁ + ... +mₙ) × (m₁' + mₙ') configuration or between the optical switch 123 and the wavelength multiplexing circuit 202. Further, an optical amplifier 203 for each WDM signal is inserted at the front stage of the wavelength demultiplexing circuit 201 or at the back stage of the wavelength multiplexing circuit 202.

A wavelength outputted from each regenerator 205 may be either of being variable or fixed. Further, it may be the same as that of the input wavelength or different therefrom. The optical fibers 203 and 204 are controlled in output power according to a change in the bit rate of the optical signal. Here, the optical switch 123, regenerators 205, and optical amplifiers 203 and 204 are controllable by the controller 124 shown in Fig. 13.

The optical switch employed in the optical circuit may be a blocking type or non-blocking type. Further, the number of the inputs of the optical circuit and the number of the outputs thereof may be identical to each other or different from each other. Furthermore, while the WDM signal is described as a uni-directional one in the above-described example, it may be a uni-wavelength signal or a bi-directional signal.

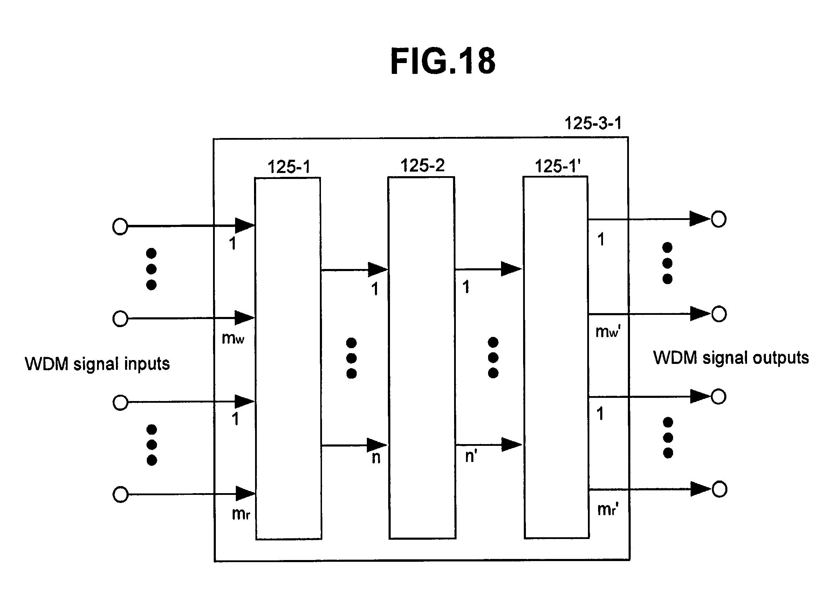

Fig. 18 shows the other embodiment of the optical circuit. The optical circuit 125-3-1 comprises a combination of an optical circuit 125-1, an optical circuit 125-2 (-1 or -2) and an optical circuit 125-1'. With its construction, the switching in units of WDM signals by the optical circuit 125-1 is performed on the WDM signal inputs. Next, the switching in units of individual wavelengths is effected by the optical circuit 125-2-1 or 125-2-2. Finally, the change-over in units of the WDM signals is performed by the optical circuit 125-1', followed by execution of the transmission of each output.

According to the optical circuit 125-3-1, the functions of the optical circuit 125-1, the optical circuit 125-2 and the optical circuit 125-1' can be implemented simultaneously. Namely, the restoration from failures such as optical fiber cut or optical cable cut, etc., and the routing in wavelength units can be realized.

The operation of the optical circuit 125-3-1 is controllable by the controller shown in Fig. 13.

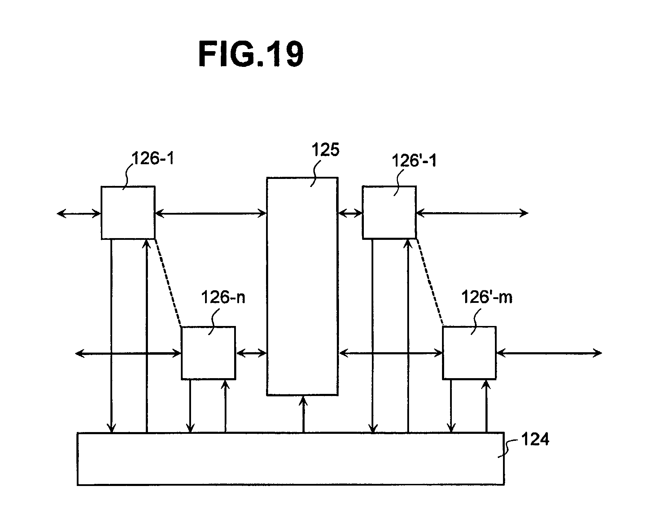

Other embodiments of the cross-connect equipment of the present invention will be described with reference to Figs. 19 through 24. Fig. 19 is a diagram for describing the other example of the bi-directional cross-connect equipment constructed by each optical repeater according to the embodiment of the present invention described heretofore. In Fig. 19, respective supervisory optical signal transmitters/receivers 126-1 through 126-n and 126-1' through 126-n' extract, by the wavelength demultiplexing, the wavelengths of supervisory optical signals from optical signals inputted from optical fibers, respectively and insert the supervisory optical signals into the optical signals to be transmitted to the corresponding optical fibers by the wavelength multiplexing.

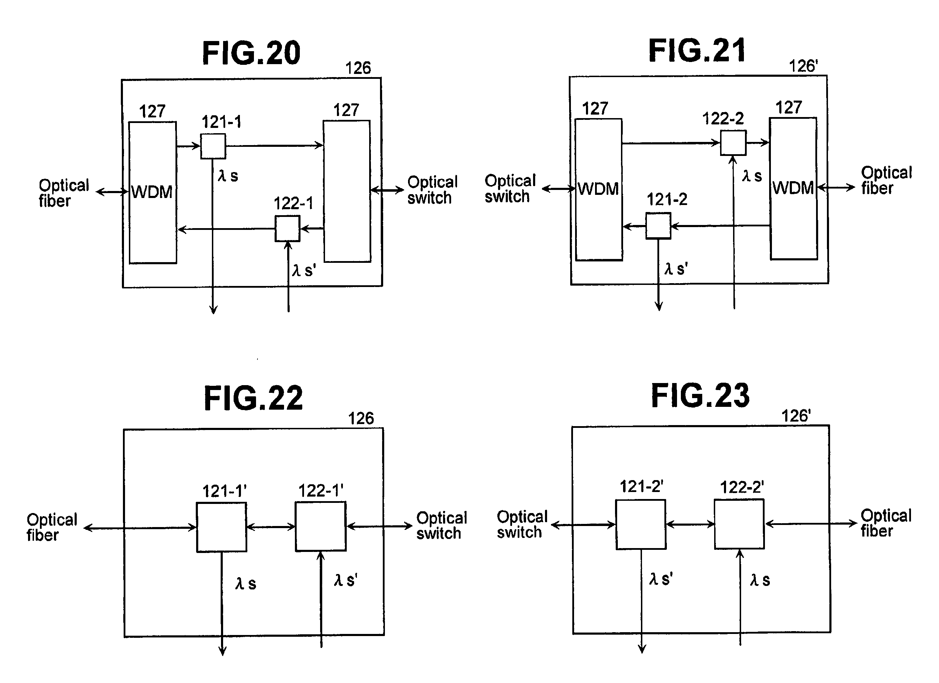

Figs. 20 and 21 are respectively diagrams showing the configurations of the respective supervisory optical signal transmitter/receiver 126 and 126'. A signal sent from the corresponding optical fiber passes through a wavelength multiplexer/demultiplexer 127 and a supervisory optical signal is separated or demultiplexed from the signal by the corresponding optical repeater 121. The supervisory optical signal is converted to a supervisory electrical signal, followed by transmission to the controller 124. Conversely, a signal from the corresponding optical switch passes through the wavelength multiplexer/demultiplexer 127. Thereafter, the optical repeater 122 multiplexes a supervisory optical signal converted into a supervisory electrical signal sent from the controller 124 and sends it out to the corresponding optical fiber. Incidentally, as shown in Figs. 22 and 23, such constructions as to omit the respective wavelength multiplexer/demultiplexer 127 from Figs. 20 and 21 are also possible. In this case, it is apparent from Fig. 22 and 23 that the sequence of the optical repeaters 121-1', 122-1', and 121-2', 122-2' may be set in reverse.

Wavelengths λs and λs' of light sources included in the optical repeaters 122 may be wavelengths lying in a 1.3 µm band or 1. 5 µm band (for example, at 1.51 µm) which shows less loss in the transmission line, outside the band of an Erbium doped fiber. Alternatively, each wavelength thereof may be a wavelength lying within the band of the Erbium doped fiber. Further, each wavelength may be a wavelength of 1.48 µm which is the same as that of the pumping light source.

In Fig. 19, reference numeral 125 indicates an optical circuit including optical switches. Other reference numerals are identical to those shown in Fig. 13.

The supervisory optical signal sent from the upstream side includes a control signal of the optical circuit 125. The optical switch, optical amplifier, regenerator, etc. included in the optical circuit can be controlled by the control signal. Similarly, the control signal for the optical cross-connect equipment on the downstream side may be included in the supervisory optical signal to be transmitted to the downstream side thereof.

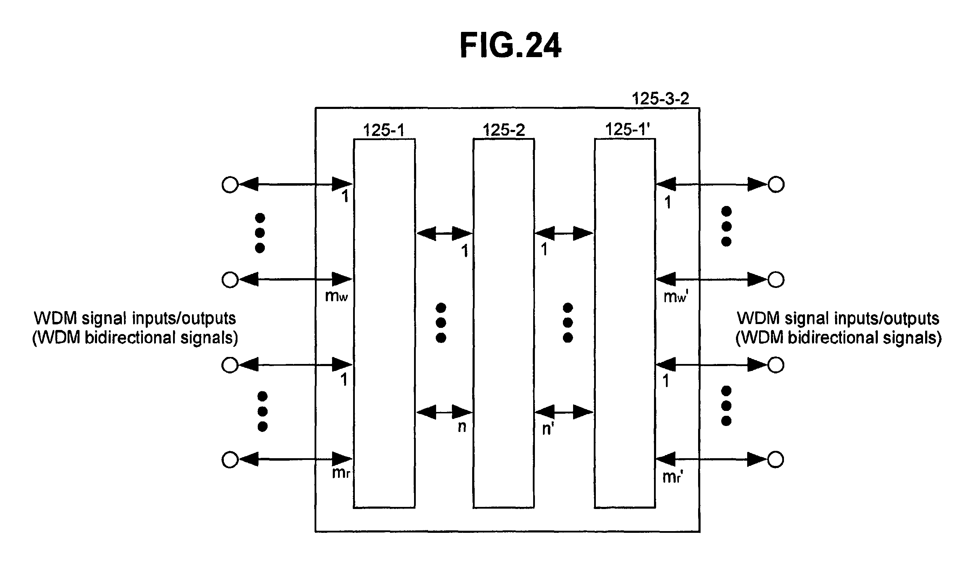

It is apparent from the reversibility of light that the example of the optical circuit applicable to the optical cross-connect equipment shown in Fig. 19 may be any one of the optical circuits shown in Figs. 14 through 16. One example thereof is shown in Fig. 24 illustrative of an example of an optical circuit in which the uni-directional optical circuit shown in Fig. 18 is bi-directionally used.

In Fig. 24, the optical circuit 125-3-2 comprises a combination of an optical circuit 125-1, an optical circuit 125-2 (-1 or -2) and an optical circuit 125-1'. With its construction, the switching in units of WDM signals by the optical circuit 125-1 is performed on WDM signal inputs. Next, the switching in units of individual wavelengths is effected by the optical circuit 125-2-1 or 125-2-2. Finally, the change-over in units of the WDM signals is performed by the optical circuit 125-1', followed by execution of the transmission of each output.

According to the optical circuit 125-3-2, the functions of the optical circuit 125-1, the optical circuit 125-2 and the optical circuit 125-1' can be implemented simultaneously. Namely, the restoration from failures such as optical fiber cut or optical cable cut, etc., and the routing in wavelength units can be realized.

The operation of the optical circuit 125-3-2 is controllable by the controller shown in Fig. 19. The optical switch employed in each optical circuit may be a blocking type or non-blocking type. Further, the number of the inputs of each optical circuit and the number of the outputs thereof may be identical to each other or different from each other.

Although the reference numeral 125-3-2 is affixed to the optical circuit for its description, the optical circuit 125-3-2 is basically identical to the optical circuit 125-3-1 shown in Fig. 18. On the contrary, this means that the optical circuits shown in Figs. 14 through 16 can be used bi-directionally.

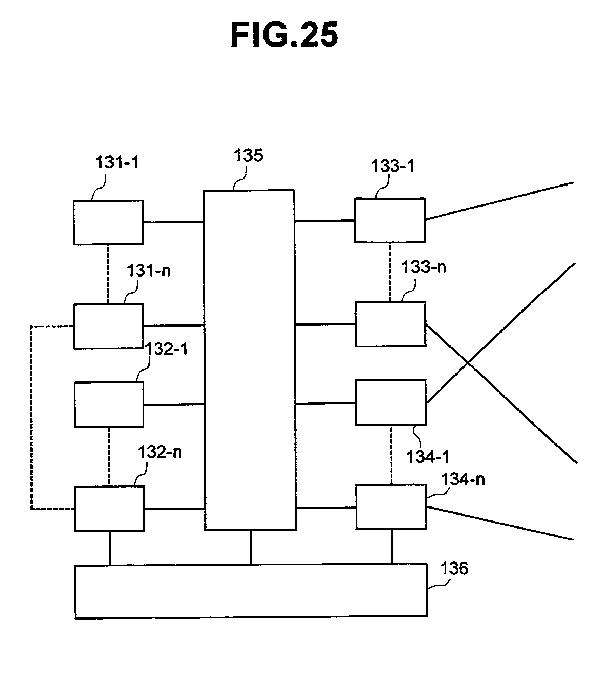

Fig. 25 is a diagram for describing a further example of the optical cross-connect equipment constructed by using the respective optical transmission equipment according to the embodiments of the present invention which have been described so far. In Fig. 25, reference numerals 131-1 through 131-n indicate data transmitters, reference numerals 132-1 through 132-n indicate data receivers, reference numerals 133-1 through 133-n and reference numerals 134-1 through 134-n indicate optical transmission equipment, reference numeral 135 indicates an optical switch, and reference numeral 136 indicates a controller, respectively.

The example of the optical cross-connect equipment shown in Fig. 25 shows a piece of optical cross-connect equipment in which the optical transmission equipment according to the respective embodiments of the present invention described above, the data transmitters and the data receivers are incorporated therein. The optical cross-connect equipment comprises the optical switch 135 having functions similar to those described by reference to Fig. 12, a plurality of the data transmitters 131-1 through 131-n electrically connected to their corresponding plural input terminals of the optical switch 135, the data receivers 132-1 through 132-n electrically connected thereto, a plurality of pieces of the optical transmission equipment 133-1 through 133-n and 134-1 through 134-n electrically connected to their corresponding plural output terminals, and the controller 136 for controlling these over their entirety.

The plurality of pieces of optical transmission equipment 133-1 through 133-n electrically connected to the output terminals of the optical switch 135 are used as those for transmitting data optical signals and supervisory optical signals. Further, one of the pieces of optical transmission equipment explained by reference to Figs. 1 through 4 and Fig. 8 is used for them. Moreover, the plurality of pieces of optical transmission equipment 134-1 through 134-n electrically connected to the output terminals of the optical switch 135 are used as those for receiving the data optical signals and the supervisory optical signals. Those constructed except for the optical transmission equipment 91 of the optical repeaters described with reference to Figs. 9 and 10 are used for them. Incidentally, the data transmitters 131-1 through 131-n and the data receivers 132-1 through 132-n may be directly coupled so as to be used as the repeater in the above description. An example in which the data transmitter 131-n and the data receiver 132-n are directly connected to each other, is illustrated in Fig. 25 by a broken line. Further, the respective optical transmission equipment 133-1 through 133-n may be replaced by the respective optical transmission equipment 122-1' through 122-n' shown in Fig. 13 respectively. Similarly, the respective optical transmission equipment 134-1 through 134-n may be replaced by the optical transmission equipment 121-1' through 121-n' shown in Fig. 13, respectively.

Furthermore, the data transmitter and the data receiver may be different in transmission bit rate, respectively. The controller 136 is capable of controlling the output power level and gain of each optical transmission equipment according to the transmission bit rate.

In the optical cross-connect equipment constructed as described above, the optical switches, the large number of optical transmission equipment, the data transmitters and the data receivers included thereinside can be controlled by one controller, one light source can be shared as for the pumping light source and the supervisory information light source which are necessary for the optical transmission equipment, and the large number of optical transmission equipment can share the use of this light source. Therefore, the equipment can be constructed in a small size and at low cost.

Although the data optical signal is described as a signal of a single wavelength in the construction shown in Fig. 25, it may be a wavelength multiplexed signal.

The respective optical cross-connect equipment shown in Figs. 12, 13, 19 and 25 are extremely suitable for use in the construction of the node equipment of the optical network constructed by connecting the plurality of pieces of node equipment to one another through the optical fibers. Incidentally, various ones have been already known as specific configurations of the node equipment which makes use of the optical cross-connect equipment.

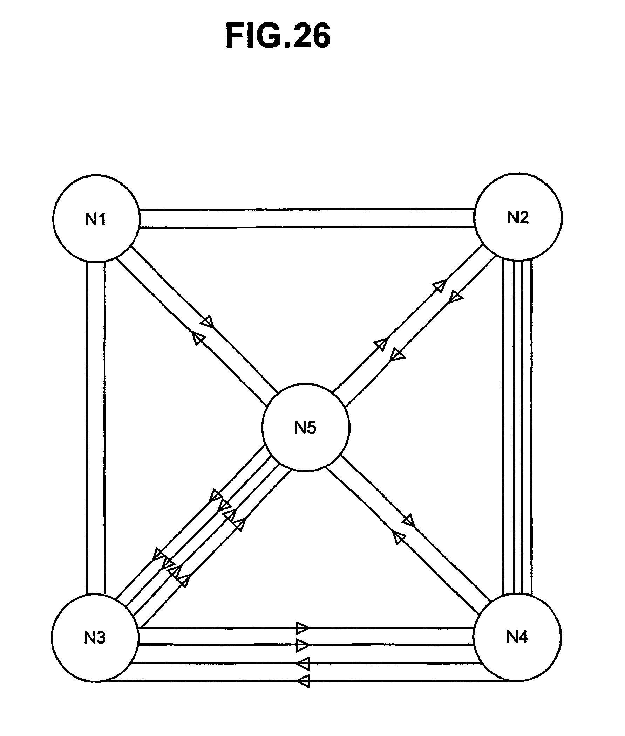

Fig. 26 is a diagram showing an example of an optical network constructed by means of the optical repeaters according to the embodiments of the present invention described heretofore, and the respective node equipment which are constructed using the optical cross-connect equipment constructed by using the optical repeaters. In Fig. 26, N1 through N5 indicate the node equipment respectively. The optical network shown in Fig. 26 is constructed so that a plurality of pieces of the node equipment N1 through N5 are connected to one another in a net-like manner by a plurality of optical fibers for bi-directionally transmitting signals. In general, the signal can be transmitted over a distance of about 70 km through the optical fiber without providing an optical relay amplifier midway of the optical fiber. It is however necessary to provide the optical relay amplifier when the distance between the respective node equipment reaches greater than the above distance. In the example shown in Fig. 26, the optical relay amplifiers indicated by marks Δ are suitably provided midway of the optical fibers.

Each of the respective node equipment N1 through N5 placed within the network comprises each of the optical cross-connect equipment described with reference to Figs. 12, 13, 19 and 25. Further, one of the respective optical transmission equipment explained with reference to Figs. 1 through 4 and Figs. 8 through 10 can be used as the optical relay amplifiers provided midway of the optical fibers used as the transmission line. As the optical relay amplifiers can be also used those each having a construction excluding the optical transmission equipment 91 of the optical repeaters described with reference to Figs. 9 and 10. As the optical relay amplifiers midway of the optical fibers used as the transmission line, can be also used an optical relay amplifier described in U.S. Patent No. 5,500,756. Further, the optical transmission equipment explained with reference to Fig. 6 can be also used as the optical relay amplifier with one-by-one optical fibers for transmitting a signal in the opposite directions as a set.

The above-described network can be constructed at low cost over its entirety by using the respective optical transmission equipment according to the respective examples, the optical repeaters including the optical transmission equipment, and the optical cross-connect equipment using these optical repeaters.

In the same manner as mentioned in the descriptions of Figs. 1 through 13 and Fig. 25, each data optical signal may be a signal of a single wavelength or a wavelength multiplexed signal in the construction shown in Fig. 26.

As has been described above, one pumping and supervisory light source can be shared for the light source for pumping the doped fibers in each optical transmission equipment and the light source for supervisory information, thereby making it possible to simplify the construction of the optical repeater including the optical transmission equipment. When the plurality of pieces of optical transmission equipment are used or the plurality of doped fibers are provided within one optical transmission equipment, an effect can be obtained that the plurality of doped fibers can be pumped up by providing only one pumping and supervisory light source, and this light source can be also used for the supervisory information.

The construction of the optical cross-connect equipment by the use of optical transmission equipment makes it possible to control the optical switches and the large number of optical transmission equipment included thereinside by one controller. Further, since one light source can be used in common as the pumping light source and the supervisory information light source and the large number of optical transmission equipment can share the use of this light source, the equipment can be constructed in a small size and at low cost.

Further, the respective optical transmission equipment and the node equipment provided with the optical cross-connect equipment using the pieces of optical transmission equipment are used so as to configure the optical network, whereby the entire optical network can be constructed at low cost.

## Claims

1. An optical cross-connect equipment for selecting connections between an input and an output with respect to an optical signal, comprising:
an optical circuit (125) including an optical switch (123) having a plurality of inputs and a plurality of outputs;
a first optical transmission equipment (121) connected to the plurality of inputs of said optical switch (123) so as to receive a first supervisory signal;
a second optical transmission equipment (122) connected to the plurality of outputs of said optical switch (123); and
a controller (124) for controlling said optical switch (123) based on information included in said first supervisory signal,
wherein
said first optical transmission equipment (121) comprises a wavelength demultiplexer (92) for demultiplexing said data signal light and said first supervisory signal light, and a supervisory light receiver (93) for receiving said first supervisory signal light demultiplexed by said wavelength demultiplexer and converting the same into a first supervisory electrical signal, and
said second optical transmission equipment (122) comprises an optical transmitter (16) for converting a second supervisory electrical signal output from said controller (124) into an optical signal and transmitting a second supervisory signal light therefrom, and a wavelength multiplexer (14) for by-wavelength multiplexing a data signal sent from said optical circuit and the second supervisory signal light.

2. The equipment of claim 1, wherein said optical circuit (125) comprises
a wavelength demultiplexing circuit (201), and
a wavelength multiplexing circuit (202).

3. The equipment of claim 2, wherein said optical circuit (125) further comprises regenerators (205) and/or optical amplifiers (203, 204) for each individual wavelength, wherein the regenerators (205), and the optical amplifiers (203, 204) are controlled by the controller (124).

## Patentansprüche

1. Optische Querverbindungseinrichtung zum Auswählen von Verbindungen zwischen einem Eingang und einem Ausgang für ein optisches Signal, mit:
einer optischen Schaltung (125), die einen optischen Schalter (123) mit mehreren Eingängen und mehreren Ausgängen aufweist;
einer ersten optischen Sendeeinrichtung (121), die an die mehreren Eingänge des optischen Schalters (123) angeschlossen ist, um ein erstes Überwachungssignal zu empfangen;
einer zweiten optischen Sendeeinrichtung (122), die an die mehreren Ausgänge des optischen Schalters (123) angeschlossen ist; und
einer Steuereinheit (124) zum Steuern des optischen Schalters auf Grundlage von in dem ersten Überwachungssignal enthaltener Information,
wobei
die erste optische Sendeeinrichtung (121) einen Wellenlängen-Demultiplexer (92) zum Demultiplexen des Datensignallichts und des ersten Überwachungssignallichts, und einen Überwachungslichtempfänger (93) zum Empfangen des ersten durch den Wellenlängen-Demultiplexer demultiplexten ersten Überwachungssignallichts und zum Konvertieren desselben in ein erstes elektrisches Überwachungssignal aufweist, und
die zweite optische Sendeeinrichtung (122) einen optischen Sender (16) zum Konvertieren eines von der Steuereinheit (124) ausgegebenen zweiten elektrischen Überwachungssignals in ein optisches Signal und zum Senden eines zweiten Überwachungssignallichts davon, und einen Wellenlängen-Multiplexer (14) zum Wellenlängen-Multiplexen eines von der optischen Schaltung gesendeten Datensignals und des zweiten Überwachungssignallichts aufweist.

2. Einrichtung nach Anspruch 1, wobei die optische Schaltung (125) aufweist:
eine Wellenlängen-Demultiplexing-Schaltung (201), und
eine. Wellenlängen-Multiplexing-Schaltung (202).

3. Einrichtung nach Anspruch 2, wobei die optische Schaltung (125) ferner Regeneratoren (205) und/oder optische Verstärker (203, 204) für jede einzelne Wellenlänge aufweist, wobei die Regeneratoren (205) und die optischen Verstärker (203, 204) durch die Steuereinheit (124) gesteuert werden.

## Revendications

1. Equipement de répartiteur optique pour sélectionner des connexions entre une entrée et une sortie concernant un signal optique, comportant :
un circuit optique (125) incluant un commutateur optique (123) ayant une pluralité d'entrées et une pluralité de sorties,
un premier équipement de transmission optique (121) connecté à la pluralité d'entrées dudit commutateur optique (123) de manière à recevoir un premier signal de surveillance,
un second équipement de transmission optique (122) connecté à la pluralité de sorties dudit commutateur optique (123), et
un contrôleur (124) pour commander ledit commutateur optique (123) sur la base des informations incluses dans ledit premier signal de surveillance,
dans lequel ledit premier équipement de transmission optique (121) comporte un démultiplexeur en longueur d'onde (92) pour démultiplexer une lumière dudit signal de données et une lumière dudit premier signal de surveillance, et un récepteur de lumière de surveillance (93) pour recevoir une lumière dudit premier signal de surveillance démultiplexée par ledit démultiplexeur en longueur d'onde et convertir celle-ci en un premier signal électrique de surveillance, et
ledit second équipement de transmission optique (122) comporte un émetteur optique (16) pour convertir un second signal électrique de surveillance délivré en sortie par ledit contrôleur (124) en un signal optique et transmettre une lumière d'un second signal de surveillance depuis celui-ci, et un multiplexeur en longueur d'onde (14) pour multiplexer en longueur d'onde un signal de données envoyé par ledit circuit optique et la lumière du second signal de surveillance.

2. Equipement selon la revendication 1, dans lequel ledit circuit optique (125) comporte :
un circuit de démultiplexage en longueur d'onde (201), et
un circuit de multiplexage en longueur d'onde (202).

3. Equipement selon la revendication 2, dans lequel ledit circuit optique (125) comporte en outre des régénérateurs (205) et/ou des amplificateurs optiques (203, 204) pour chaque longueur d'onde individuelle, les régénérateurs (205) et les amplificateurs optiques (203, 204) étant commandés par le contrôleur (124).
